# EUROPÄISCHE PATENTSCHRIFT

(11) **EP 1 790 862 B1**
(45) Veröffentlichungstag und Bekanntmachung des Hinweises auf die Patenterteilung: **11.03.2009**
(21) Anmeldenummer: 06022790.7
(22) Anmeldetag: 02.11.2006
(51) Int. Cl.: F16B 4/00, F16B 11/00, B60N 2/22, B60N 2/44

(54) **Halterung für eine Spindel eines Sitzverstellantriebes für ein Kraftfahrzeug**
Support for a spindle of a seat adjusting drive for a motor vehicle
Support pour la broche de l'organe de manoeuvre du réglage d'un siège de véhicule à moteur

(30) Priorität: 23.11.2005 DE 102005056145; 23.02.2006 DE 102006008989
(43) Veröffentlichungstag der Anmeldung: 30.05.2007
(73) Patentinhaber: IMS Gear GmbH, 78166 Donaueschingen (DE)
(72) Erfinder: Ehrhardt, Winfried, 78166 Donaueschingen (DE)
(74) Vertreter: Patentanwälte Westphal, Mussgnug & Partner

(56) Entgegenhaltungen:
- EP-B1- 1 068 093
- DE-A1- 10 200 984

## Beschreibung

Die Erfindung betrifft eine Halterung für einen Antrieb einer Sitzverstelleinrichtung in einem Kraftfahrzeug gemäß den Merkmalen des Oberbegriffs des Anspruchs 1.

### Stand der Technik

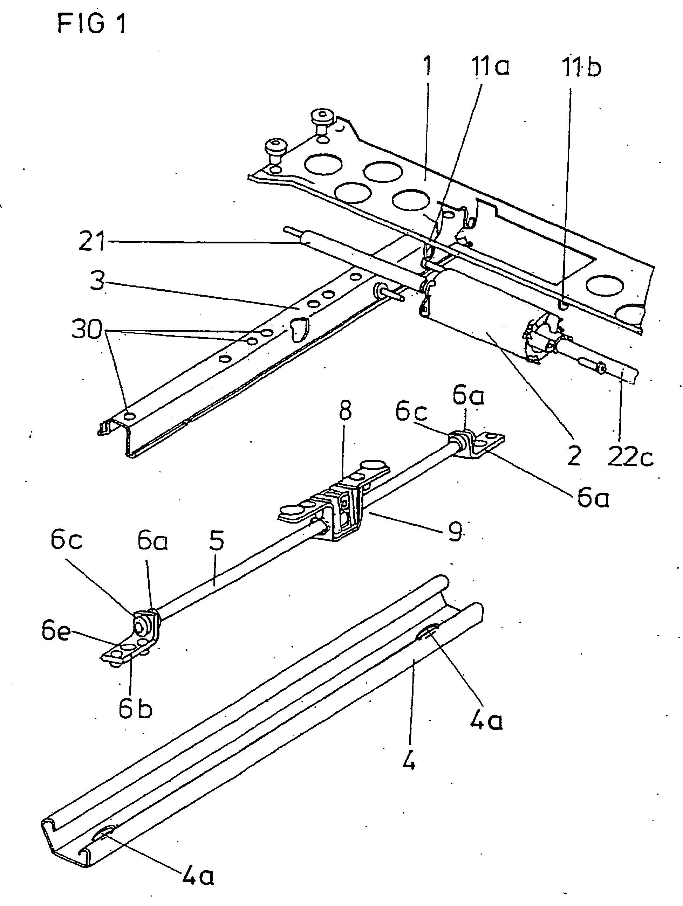

Ein bekannter Antrieb für Sitzverstelleinrichtungen ist in EP. 1 068 093 B1 beschrieben. Der Antrieb ist in der dortigen und in der vorliegenden Fig. 1 dargestellt. Wie aus Fig. 1 ersichtlich, ist eine Halteplatte 1, auf der der Sitz eines Kraftfahrzeuges zu befestigen ist, einer Oberschiene 3 zugeordnet. An der Halteplatte 1 sind Befestigungslaschen 11 für einen Motor 2 vorgesehen, so dass dieser fest mit der Halteplatte 1 und damit fest mit der Oberschiene verbunden werden kann. Beidseitig am Motor 2 sind Antriebswellen 21, 22 angeordnet. Hierzu können flexible Wellen verwendet werden. Diese Antriebswellen 21, 22 stellen die Verbindung zu einem Getriebe 9 her, das in der EP 1 068 093 B1 ausführlich beschrieben ist. Dieses Getriebe 9 sitzt in einem U-förmigen Haltebügel 8 mit Befestigungslöchern 8a, durch welche das Getriebe 9 an der Oberschiene 3 befestigt wird.

Die Oberschiene 3 gleitet direkt oder über nicht dargestellte Verstell- und/oder Lagerelemente auf einer am Fahrzeugboden des Kraftfahrzeuges festgelegten Unterschiene 4. In Funktionslage der Oberschiene 3 und Unterschiene 4 werden diese durch ihre Berührungs- bzw. Lagerungsbereiche so gehalten, dass sich ein Hohlraum ergibt. Innerhalb dieses Hohlraumes ist eine Gewindespindel 5 angeordnet. Diese Gewindespindel 5 wird zwischen Halterungen 6a und 6b aufgenommen, die auf der Unterschiene 4 fest angeordnet sind. Hierfür verfügen die Halterungen 6a und 6b über Befestigungslöcher 6e, durch welche geeignete Schraubverbindungen oder ähnliche Befestigungsmittel ragen und an Befestigungslöchern 4a der Unterschiene 4 gehalten werden. Die Spindel 5 ist selbst über geeignete Befestigungsmuttern 6c an die Halterungen 6a und 6b festgeschraubt.

Als nachteilig erweist sich bei dem in Fig. 1 dargestellten Antrieb die Gestaltung der Halterungen 6a und 6b.

Diese L-förmig gestalteten Halterungen 6a, 6b werden regelmäßig als Stanzbiegeteile hergestellt. Dabei werden die Halterungen zunächst als streifenförmige Elemente aus Metallplatten herausgestanzt und anschließend im rechten Winkel gebogen. Solche Stanzbiegeteile sind zwar in der Herstellung verhältnismäßig einfach und damit preisgünstig. Als nachteilig erweist sich jedoch die zu geringe Festigkeit dieser Halterungen. Es ist bekannt, dass solche Stanzbiegeteile im Crashfall nur begrenzte Kräfte aufnehmen können. In Crash-Versuchen hat sich dabei herausgestellt, dass solche Stanzbiegeteile nur verhältnismäßig geringe Kräfte von bis zu etwa 20 kN aufnehmen können, ohne dabei ihre bestimmungsgemäße Funktion, beispielsweise durch Bruch zu verlieren.

Weitere Halterungen für Sitzverstellantriebe sind z. B. in WO 86/06036 A1, DE 100 03 305 C1 und DE 43 01 241 C2 beschrieben. Dabei offenbart beispielsweise DE 100 03 305 C1 eine Halterung zur verdrehungsfreien Fixierung einer Spindel, die zweischalig ausgeführt ist und auf ihrer inneren Oberfläche entweder in einer oder beiden der Schalen ein Konturierung aufweist, die von dem Gewinde der zu fixierenden Spindel abweicht. Eine Fixierung der Spindel in dieser zweischaligen Halterung wird dabei im wesentlichen durch die Klemmkräfte erzielt, die bei der Verbindung der beiden Schalen, beispielsweise durch Verschraubung oder Vernietung entstehen. Nachteilig wirkt sich dabei aus, dass diese beispielhaft dargestellte Art von Fixierungen beziehungsweise Halterungen fertigungstechnisch verhältnismäßig aufwendig ist und auf Grund des Aufbaus aus mehreren Einzelkomponenten nicht unter allen Betriebsbedingungen eine dauerhafte Verbindung zur Aufnahme der geforderten Kräfte gewährleistet.

Eine ebenfalls weitere Lösung, die von der Anmelderin stammt ist in dem erteilten Patent DE 10 2004 001 624 B3 beschrieben. Dort werden die Spindelenden in wannenförmigen Ausnehmungen der blockartigen Halterung z.B. durch Laserschweißen dauerhaft festgelegt.

Schließlich beschreibt die DE 102 00 984 A1 die Enden der Spindel in eine rohrförmige Halterung zu stecken und dort zu verpressen. Dies erfolgt in zwei axial beabstandeten Bereichen an jeweils gegenüberliegenden Seiten. Dabei muss mit sehr hohen Presskräften gearbeitet werden. Nachteilig wirkt sich dabei aus, dass solch hohe Verpresskräfte möglicherweise beim schlagartig vor sich gehenden Verpressvorgang zu unerwünschten Formlagetoleranzen bei der Spindel führen können, wodurch sich die Spindel verbiegen kann.

### Aufgabenstellung

Aufgabe der vorliegenden Erfindung ist es, eine Halterung zur Verfügung zu stellen, durch die zuverlässig und dauerhaft eine formschlüssige Verbindung zwischen den Spindeln eines Sitzlängsverstell-Getriebes und dieser Spindelhalterung ermöglicht wird und bei der die oben genannten Nachteile nicht auftreten.

Die Aufgabe wird gelöst durch eine ein Ende der Spindel des Sitzlängsverstell-Getriebes in einer Durchgangsbohrung aufnehmende Halterung, die als kompakter metallischer Block ausgeführt ist, wobei die Spindel durch in das Spindelgewinde der Spindel gepresstes Material der Halterung in der Halterung formschlüssig und dauerhaft gehalten wird.

Die vorteilhafte Wirkung der Erfindung ergibt sich aus der Verwendung eines Materials für den metallischen Block der Halterung, das weicher ist als das Material der Spindel und aus der Anwendung eines Verpressvorganges, der nicht schlagartig auf einen großen Flächenbereich des metallischen Blocks der Halterung angewendet wird, sondern eine kontinuierlich über einen gewissen Zeitbereich erfolgende und nacheinander auf unterschiedliche Bereiche der Halterung einwirkende Verformung darstellt, wodurch unerwünschte Formlagetoleranzen bei der Spindel und eine dadurch bewirkte Verbiegung vermieden werden können.

Weitere Vorteile können sich daraus ergeben, dass die erfindungsgemäße Lösung eine kostengünstige Alternative zur Verbindung von metallischen Bauteilen mittels Lasertechnik darstellt und insbesondere auch geeignet ist zur dauerhaften und formschlüssigen Verbindung von nicht oder nur schwer schweißbaren Materialien.

Noch weitere Vorteile können sich dadurch ergeben, dass das zur erfindungsgemäßen Erzielung der formschlüssigen und dauerhaften Verbindung eingesetzte Verformungsverfahren geringe Betriebskosten aufweist und eine einfache Prozesskontrolle im Verlauf des Herstellungsprozesses erlaubt, wodurch unter anderem eine unproblematische Einhaltung der erforderlichen Form- und Lagetoleranzen der zu fertigenden Verbindung gewährleistet werden kann. Da das eingesetzte Verformungsverfahren darüber hinaus nicht den Einsatz speziell gefertigter Werkzeuge erfordert, kann eine entsprechende Fertigung der dauerhaften und formschlüssigen Verbindung zwischen Spindel und Halterung ohne große Kosten und aufwendige Einrichtzeiten auch in weiteren dezentralen Fertigungsstandorten erfolgen.

Weiterbildungen der Erfindung sind Gegenstand der Unteransprüche.

### Ausführungsbeispiel

Die erfindungsgemäße Verbindung zwischen Spindel und Spindelhalter wird nachfolgend anhand eines Ausführungsbeispieles im Zusammenhang mit weiteren Figuren näher erläutert. Es zeigen:
Fig. 1 den bereits erläuterten Antrieb nach dem bekannten Stand der Technik mit einer an ihren Enden über Halterungen festgelegten Spindel, auf der ein längs verfahrbares Getriebe sitzt,
Fig. 2 ein auf einer Spindel sitzendes Getriebe ähnlich zu Fig. 1, jedoch mit Halterungen, die nach einem Ausführungsbeispiel der Erfindung gestaltet sind,
Fig. 3 eine perspektivische Darstellung der erfindungsgemäßen Halterung,
Fig. 4 die Darstellung des Querschnitts der erfindungsgemäßen Halterung
Fig. 5 die Darstellung des Querschnitts der erfindungsgemäßen Halterung mit in die Durchgangsbohrung eingebrachter Spindel
Fig. 6 ein Beispiel einer Ausführungsform der endegefertigten erfindungsgemäßen Halterung mit Verpressbereich
Fig. 7 Darstellung des durch die Verpressung erfolgten Materialflusses und der Deformation der Spindel an einem bearbeiteten Ausführungsbeispiel

In den nachfolgenden Figuren bezeichnen, sofern nicht anders angegeben, gleiche Bezugszeichen gleiche Teile mit gleicher Bedeutung.

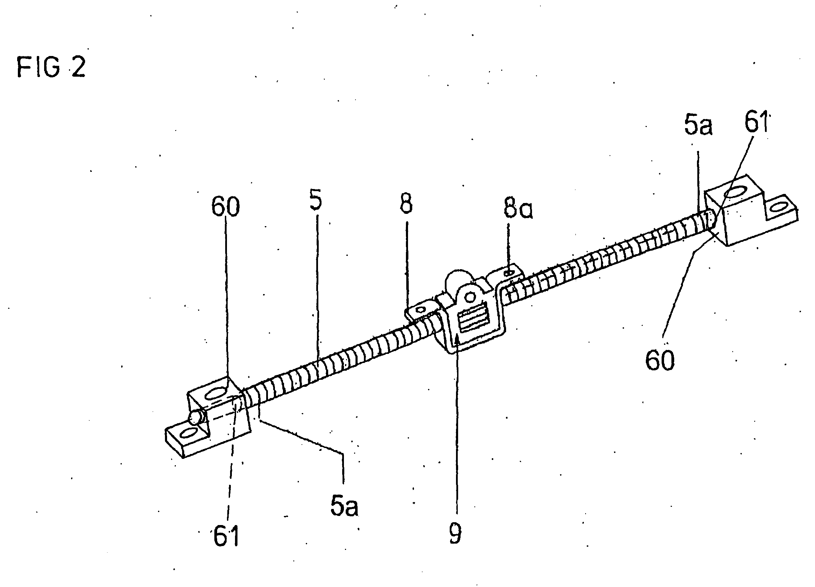

In Fig. 2 ist, ähnlich wie in Fig. 1, wiederum eine Spindel 5 und ein auf der Spindel 5 entlang der Spindelachse A verfahrbares Getriebe 9 dargestellt. Das Getriebe 9 ist in der bereits bekannten, U-förmigen Halterung 8 festgelegt, welche über Befestigungslöcher 8a an der Oberschiene 3 (vgl. Fig. 1) eines Fahrzeugsitzes festschraubbar ist.

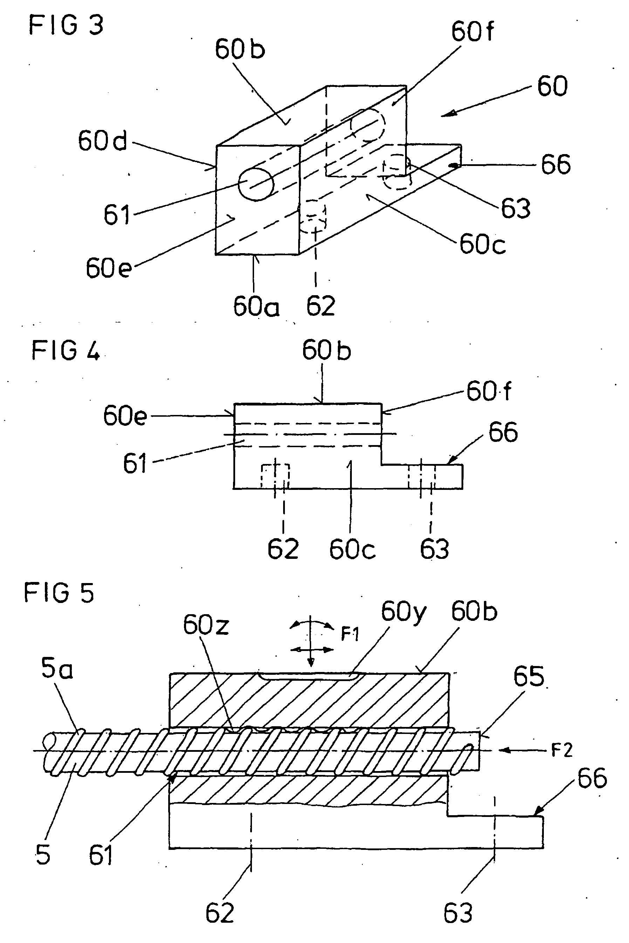

Im Gegensatz zur Darstellung von Fig. 1 ist die Spindel 5 an ihren Enden 5a mit besonders gestalteten Halterungen 60, die im Zusammenhang mit den Figuren 3 bis 6 noch näher erläutert werden, feststehend verbunden. Diese Halterungen 60 umfassen im Gegensatz zu den in Fig. 1 dargestellten, L-förmig als Stanzbiegeteile ausgestalteten Halterungen 6a, 6b einen kompakten metallischen Block, der eine Durchgangsbohrung 61 zur Aufnahme der Spindel 5 aufweist, wobei die Spindel 5 durch in das Spindelgewinde der Spindel 5 gepresstes Material der Halterung 60 in der Halterung 60 formschlüssig und dauerhaft gehalten wird. Die Fixierung zwischen Spindel 5 und Halterung 60 erfolgt also nicht wie in Fig. 1 dargestellt über einfache Verschraubung der Spindel 5 mit Hilfe von Schraubverbindungen 6c in einem verhältnismäßig dünnen Materialbereich eines Stanzbiegeteils 6a, 6b, sondern durch formschlüssiges Verpressen des Materials der Halterung 60 in das Gewinde der Spindel 5 im Bereich der Durchgangsbohrung 61, wodurch unter anderem in einem Crashfall im Vergleich zu Halterungen aus Stanzbiegeteilen weitaus größere Kräfte aufgenommen werden können, ohne die bestimmungsgemäße Funktion, beispielsweise das Zusammenwirken von Sitz, Sicherheitsgurt und Airbag im Falle eines Crashs unerwünscht zu beeinträchtigen.

Fig. 3 zeigt eine perspektivische Darstellung einer Ausführungsform der erfindungsgemäßen Halterung 60. Die Halterung 60 umfasst einen plattenförmigen, horizontalen Schenkel 66, und einen durch die Flächen 60a, 60b, 60c, 60d, 60e und 60f abgegrenzten metallischen Block, wobei dieser metallische Block und der horizontale Schenkel 66 beispielsweise gemeinsam aus einem massiven Werkstück, zum Beispiel durch Fräsen aus einem einzelnen Metallblock hervorgegangenen sind, so dass zwischen Schenkel 66 und dem durch die Flächen 60a, 60b, 60c, 60d, 60e und 60f abgegrenzten metallischen Block keine zusätzliche, die Festigkeit der Gesamtstruktur schwächende Verbindungstechnik notwendig ist.

Die Festigkeit der Gesamtstruktur wird daher ausschließlich über die Eigenschaften des verwendeten Materials und die eingesetzten Materialstärken bestimmt und eine fertigungstechnische Schwächung der Struktur der Halterung 60 im Bereich des Übergangs vom Schenkel 66 zu dem durch die Flächen 60a, 60b, 60c, 60d, 60e und 60f abgegrenzten metallischen Block ist im Gegensatz zu einer wie weiter oben beschrieben durch Biegen aus einem Stanzteil geformten L-förmigen Struktur nicht zu erwarten.

Weiterhin umfasst die Halterung 60 gemäß Fig. 3 eine in den plattenförmigen, horizontalen Schenkel 66 eingearbeitete Befestigungsöffnung 63 und eine in den durch die Flächen 60a, 60b, 60c, 60d, 60e und 60f abgegrenzten metallischen Block eingearbeitete Befestigungsöffnung 62. Ebenfalls umfasst die Halterung 60 gemäß Fig. 3 eine Durchgangsbohrung 61, die sich zwischen den Stirnflächen 60e und 60f des metallischen Blocks erstreckt.

Die Halterung 60 ist dabei, wie die perspektivische Ansicht gemäß Fig. 3 zeigt, in der vorliegenden Ausführungsform ebenfalls L-förmig ausgestaltet und weist einen plattenförmigen, horizontalen Schenkel 66 auf sowie einen vertikalen Schenkel, der als massives Teil aus Vollmaterial ausgebildet ist mit einer Bodenfläche 60a, zwei gegenüberliegenden Flächen 60c, 60d, zwei gegenüberliegenden Stirnflächen 60e, 60f und einer Oberfläche 60b, wobei in der beispielhaften Ausführungsform nach Fig. 3 die gegenüberliegenden Flächen 60a und 60b, 60c und 60d sowie 60e und 60f jeweils parallel zueinander verlaufen und die nicht parallel zueinander verlaufenden Flächen, wie beispielsweise 60b und 60c oder 60b und 60d im rechten Winkel aufeinander treffen, so dass insgesamt eine quaderförmige Struktur gebildet wird.

Der aus den oben ausgeführten Flächen 60a bis 60f begrenzte vertikale Schenkel der Halterung ist jedoch nicht auf die in diesem Ausführungsbeispiel gezeigte, streng rechtwinklige Ausgestaltung eingeschränkt, sondern kann beliebige andere sinnvolle Formen einnehmen, wie sie für die optimale Anwendung (zur Verfügung stehender Platz, eventuelle Anpassung an Konturen der Aufnahme der Halterung usw.) notwendig sind, sofern die erfindungsgemäße formschlüssige Verbindung zwischen Halterungen 60 und Spindel 5 mit den geforderten Festigkeitswerten gewährleistet ist.

Fig. 4 zeugt in einer einfachen Darstellung des Querschnitts wiederum die Halterung gemäß Fig. 3. und umfasst ein erstes Befestigungsloch 62 und eine zweites Befestigungsloch 63, einen horizontalen Schenkel 66 und eine Durchgangsbohrung 61 zur Aufnahme und dauerhaften Befestigung der Spindel 5.

In dem plattenförmigen, horizontalen Schenkel 66 ist dabei mindestens ein Befestigungsloch 63 eingearbeitet. Dieses Befestigungsloch 63 dient in Verbindung mit der in den durch die Flächen 60a, 60b, 60c, 60d, 60e und 60f abgegrenzten metallischen Block optional eingearbeiteten Befestigungsöffnung 62 dazu, die Halterungen 60 über die Unterschiene 4 (vgl. hierzu Fig. 1) am Fahrzeugboden mittels geeigneter Befestigungselemente, z. B. Schrauben, zu fixieren.

Im Falle des mindestens einen Befestigungsloches 63 kann es sich bei den Befestigungselementen beispielsweise um Schraub- oder Nietverbindungen handeln. Bei Schraubverbindungen kann das erste Befestigungsloch 63 dabei beispielsweise ein Innengewinde aufweisen, über das die Verbindung zur Unterschiene 4 und zum Fahrzeugboden durch Verschrauben mit einer Schraube entsprechenden Gewindes und entsprechender, die geforderten Crashlasten übersteigender Festigkeit (Zug- beziehungsweise Scherfestigkeit der Schraube) hergestellt wird.

Alternativ dazu kann die Befestigungsöffnung 63 auch als Durchgangsbohrung ohne Gewinde und mit entsprechendem Durchmesser ausgeführt sein, um eine Verbindung zur Unterschiene 4 und zum Fahrzeugboden durch Verschraubung einer durch die Durchgangsbohrung hindurch geführten Schraube entsprechender Festigkeit mit einer entsprechenden Mutter, beispielsweise einer selbst sichernden Klemmmutter herzustellen.

Der Durchmesser der Schraube und der Durchmesser des mindestens einen Befestigungsloches 63 werden dabei so gewählt, dass die Schraube einerseits während des Montagevorganges ausreichend leicht durch das Befestigungsloch 63 hindurch geführt werden kann, andererseits aber das Spiel zwischen dem Außendurchmesser der Schraube und dem Innendurchmesser des Befestigungsloches 63 so gering ist, dass die im Crashfall auf den Sitz und damit die Halterung 60 einwirkenden Kräfte in ausreichendem Maß auf die Unterschiene 4 und den Fahrzeugboden übertragen werden können.

Gleichzeitig werden die Abmessungen des horizontalen Schenkels 66, wie beispielsweise Materialstärke, Länge und Breite ebenfalls so bemessen, dass die Aufnahme und Weiterleitung der für einen Crashfall maximal zu tolerierender Kräfte sicher zerstörungsfrei und im Rahmen der vorgegebenen Verformungstoleranzen erfolgen kann.

Die in Fig. 4 dargestellte und bereits aus Fig. 3 bekannte Befestigungsöffnung 62 ist im Gegensatz zur mindestens einen Befestigungsöffnung 63 im horizontalen Schenkel 66 optional und nicht als Durchgangsbohrung ausgeführt, sondern als Senkbohrung festgelegter Tiefe. Im Falle des Befestigungsloches 62 kann es sich bei den Befestigungselementen beispielsweise um eine Schraubverbindung oder um die Aufnahme für ein entsprechend ausgeformten, passgenau in die Befestigungsöffnung 62 eingesetztes, beispielsweise auf der Unterschiene 4 angebrachtes Gegenstück handeln. Bei Schraubverbindungen kann das Befestigungsloch 62 dabei beispielsweise wiederum ein Innengewinde aufweisen, über das die Verbindung zur Unterschiene 4 und zum Fahrzeugboden durch Verschrauben mit einer Schraube entsprechenden Gewindes, entsprechender Länge und entsprechender, die geforderten Crashlasten übersteigender Festigkeit (Zug- beziehungsweise Scherfestigkeit der Schraube) hergestellt wird.

Kann mit der Befestigung über das Befestigungsloch 63 bereits ausreichende mechanische Festigkeit der Verbindung zwischen Halterung 60 und Unterschiene 4 beziehungsweise dem Fahrzeugboden, insbesondere in axialer Richtung der des Befestigungsloches 63 erzielt werden, kann das Befestigungsloch 62 wie oben beschrieben in einer fertigungstechnisch vereinfachten und damit kostenseitig günstigeren Ausführungsform der Halterung 60 ohne Innengewinde als einfache Senkbohrung realisiert werden.

Diese Senkbohrung kann zur Aufnahme eines beispielsweise auf der Unterschiene 4 befindlichen, passgenauen Gegenstückes dienen, welches durch die Herstellung der Befestigung in der Befestigungsöffnung 63 zuverlässig in der Befestigungsöffnung 62 fixiert wird und damit eine vorgegebene Ausrichtung der Halterung 60 in axialer Richtung zur Spindel 5 gewährleistet. Darüber hinaus kann diese beschrieben Ausführungsform der Befestigung bei entsprechender Dimensionierung und Passgenauigkeit große laterale Kräfte aufnehmen, die in diesem Fall nicht alleine über die Befestigung der Befestigungsöffnung 63 abgeleitet werden müssen. Nicht zuletzt stellt diese Lösungsform auch einen zeitlichen und gegebenenfalls kostenseitigen Vorteil bei der Montage der Halterung 60 dar, da in diesem Falle dazu nur eine einzige Schraubverbindung herzustellen ist, gleichzeitig aber die präzise Ausrichtung der Halterung 60 und die Aufnahme großer lateraler Kräfte gewährleistet sind.

Fig. 5 zeigt wiederum eine Querschnittsdarstellung der Halterung 60, wobei hier das erfindungsgemäß in der Durchgangsöffnung 61 der Halterung 60 sitzende eine Ende der Spindel 5 dargestellt ist. Dabei ist der Durchmesser der Durchgangsbohrung 61 so gewählt, dass die Spindel 5 einerseits ohne erhöhten Kraftaufwand in diese Durchgangsbohrung 61 eingesetzt werden kann, andererseits aber das Spiel zwischen dem durch das Spindelgewinde 5a bestimmten Außendurchmesser der Spindel 5 und dem Innendurchmesser der Durchgangsbohrung 61 so gering ist, dass bei der späteren Verpressung von Halterung 60 und Spindel 5 unter der durch die Verpressung erzeugten Krafteinwirkung ausreichender Materialfluss vom Material der Halterung 60 in das Spindelgewinde 5a erfolgen kann, um die gewünschte formschlüssige und dauerhafte Verbindung zwischen Halterung 60 und Spindel 5 mit ausreichender Festigkeit zu erzielen.

Mit F1 sind in Fig. 5 exemplarisch bezeichnet ein möglicher Ort und eine mögliche Richtung von mindestens einer Krafteinwirkung bei der Herstellung der formschlüssigen Verbindung zwischen der Halterung 60 und der Spindel 5. Dabei wird diese Krafteinwirkung über ein geeignetes Werkzeug, zum Beispiel einen auf der die Krafteinwirkung ausübenden Stirnseite leicht abgerundeten Stempel, auf das zu bearbeitende Werkstück, hier die Halterung 60, ausgeübt. Die Krafteinwirkung erfolgt dabei im Wesentlichen senkrecht zu einer der Oberflächen der Halterung 60, im Beispiel der Fig. 5 senkrecht zur Fläche 60b. Dabei wird der die Krafteinwirkung ausübende Stempel während der Bearbeitung der Halterung 60 zusätzlich um einen vorgegebenen Winkel in Form einer Drehbewegung um den Auflagepunkt des Stempels auf der Oberfläche aus der Senkrechten zu der bearbeitenden Fläche verkippt und zwar nacheinander in alle Richtungen im Umkreis von 360 Grad.

Dadurch ergibt sich eine taumelnde Bewegung des die Krafteinwirkung F1 ausübenden Stempels (Presswerkzeug), über die eine kontinuierliche plastische Verformung des Materials der Halterung 60 am Ort dieser Krafteinwirkung bis in tiefere Bereiche des Materials hinein erzielt wird. Durch die geeignete Wahl der Größe der Krafteinwirkung F1 kann die Tiefe der Krafteinwirkung in das Material, hier der Halterung 60, hinein wunschgemäß angepasst werden.

Im vorliegenden Fall wird dabei die Materialstärke des die Durchgangsbohrung 61 zur Aufnahme der Spindel 5 umgebenden Materials so gewählt, dass einerseits ausreichende Festigkeit der Halterung 60 gegenüber den in einem Crashfall auftretenden Kräften zur Verfügung gestellt wird und andererseits die durch die beschriebene Krafteinwirkung F1 bedingte plastische Verformung des Materials der Halterung 60 im Bereich des Spindelgewindes 5a einen Materialfluss des Materials der Halterung 60 erzeugt, der erfindungsgemäß Material 60z der Halterung 60 zuverlässig und dauerhaft in das Spindelgewinde 5a der Spindel 5 presst. Zugleich bildet sich auf der Oberfläche 60b der Halterung 60 eine Vertiefung 60y aus.

Im Gegensatz zu dem weiter oben beschriebenen Verfahren des schlagartigen Verpressens großer Bereiche eines Werkstücks nach dem Stand der Technik durch Beaufschlagung mit einer einmaligen, kurzfristig über eine größere Fläche gleichzeitig ausgeübten Krafteinwirkung, ist die Krafteinwirkung F1 zu jedem Zeitpunkt des Prozesses der plastischen Verformung des Materials der Halterung 60 räumlich auf eine nähere Umgebung des jeweiligen Ortes der Krafteinwirkung beschränkt, wodurch gegenüber dem Verpressen nach dem Stand der Technik mit weitaus geringeren Verpresskräften (Spitzenkräften) über einen längeren Einwirkungszeitraum gearbeitet werden kann, wodurch eine über einen längeren Zeitraum in kleineren Schritten erfolgende plastische Verformung erzeugt wird und wodurch unerwünschte Formlagetoleranzen der Spindel 5, die beispielsweise ein unerwünschtes Verbiegen der Spindel 5 zur Folge haben können, vermieden werden.

Um eine für eine formschlüssige und dauerhafte Verbindung zwischen Halterung 60 und Spindel 5 notwendige Gesamtfestigkeit zu erzielen, wird der die Krafteinwirkung F1 ausübende Stempel nicht nur in der beschriebenen, taumelnden Bewegung an einer Stelle der Halterung 60 über einen längeren Zeitraum angewendet, sondern wird zusätzlich auf der zu bearbeitenden Oberfläche der Halterung 60 auf eine Weise verschoben, dass sich insgesamt eine flächenförmige Krafteinwirkung F1 auf das Material der Halterung 60 ergibt und damit in einem entsprechend ausgedehnten Bereich Material 60z der Halterung 60 im Bereich der Durchgangsbohrung 61 in das Spindelgewinde 5a der Spindel 5 gepresst wird.

Erfindungsgemäß werden dabei die Materialien für die Halterung 60 und die Spindel 5 so gewählt, dass das Material des durch die Flächen 60a, 60b, 60c, 60d, 60e und 60f abgegrenzten und die Durchgangsbohrung 61 zur Aufnahme der Spindel 5 aufweisenden metallischen Blockes der Halterung 60 weicher ist als das Material der Spindel 5. Ziel ist es dabei, dass die ursprüngliche Struktur des Spindelgewindes 5a auch nach dem Verpressvorgang im Bereich der Durchgangsbohrung 61 weitgehend erhalten bleibt.

Dies gewährleistet, dass durch die durch den Verpressvorgang ausgelöste plastische Verformung des Materials der Halterung 60 im Bereich der Krafteinwirkung F1 ein Materialfluss des weicheren Materials der Halterung 60 in das Gewinde 5a der aus einem härteren Material ausgeformten Spindel 5 stattfindet und damit die erwünschte formschlüssige, dauerhafte Verbindung zwischen Spindel 5 und Halterung 60 mit der geforderten Festigkeit erzeugt wird. Dabei hat es sich als vorteilhaft erwiesen, wenn das für die Halterung 60 verwendete Material etwa 20% bis 30% weicher ist als das für die Spindel 5 verwendete Material.

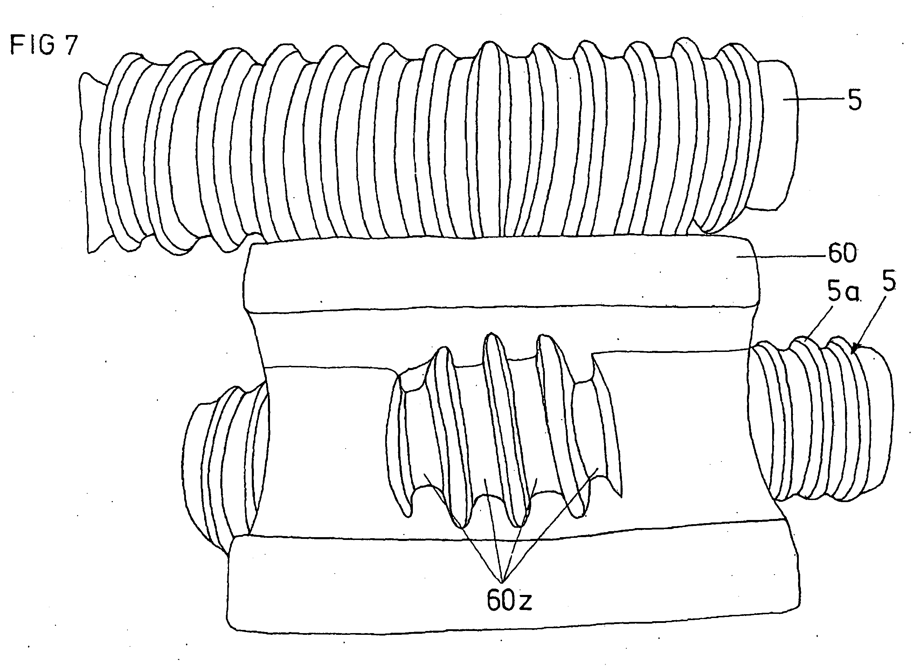

Im vorliegenden Fall wurden Versuche zur erfindungsgemäßen Verpressung durchgeführt mit einer aus 100CR6-Stahl gefertigten Spindel 5 und einer aus Automatenstahl gefertigten Halterung 60. Entsprechende Ergebnisse dazu sind der Fig. 7 zu entnehmen und werden weiter unten erläutert.

Wie weiter oben ausgeführt, wird die Einwirkung der Kraft F1 typischerweise flächenförmig ausgeführt. Dabei wird die Krafteinwirkung F1 über mindestens einen Flächenbereich auf mindestens einer den metallischen Block der Halterung 60 mit der Durchgangsbohrung 61 definierenden Flächen ausgeübt.
Eine typische Form der Anwendung ist dabei, die Krafteinwirkung F1 auf der Fläche 60b auszuüben, wodurch im Bereich der Durchgangsbohrung 61 das dieser oberen Fläche 60b zugewandte Material der Halterung 60 in das Spindelgewinde 5a der Spindel 5 gepresst wird.

Da die Spindel 5 erfindungsgemäß aus einem gegenüber der Halterung 60 härteren Material ausgeführt ist, findet als Folge einer Krafteinwirkung F1 auf beispielsweise eine obere Fläche 60b auch eine Krafteinwirkung an der Grenzfläche der Spindel 5 und dem der oberen Fläche 60b gegenüberliegenden Bereich der Durchgangsbohrung 61 (hier der Bereich in Richtung der Grenzfläche 60a) ebenfalls eine plastische Verformung statt, die zu Materialfluss des weicheren Materials der Halterung 60 in das härtere Material des Spindelgewindes 5a führt, jedoch in geringerem Umfang als im Bereich der direkten Krafteinwirkung F1.

Dabei können in weiteren Ausführungsformen der vorliegenden Erfindung aber auch mehrere getrennte Flächenbereiche auf einer der den metallischen Block der Halterung definierenden Flächen mit der entsprechenden verformenden Krafteinwirkung F1 beaufschlagt werden oder beispielsweise jeweils ein oder mehrere getrennte Flächenbereiche auf mehreren den metallischen Block der Halterung definierenden Flächen. Diese können typischerweise gegenüberliegende Flächen sein, aber auch jede andere Kombination aus Größe und Anzahl der Einwirkflächen sowie der Richtung für die Krafteinwirkung F1, wobei sinnvolle Festigkeitswerte nur erzielt werden können bei Krafteinwirkung auf Flächen, die lateral zur Achse der Spindel 5 ausgerichtet sind.

Damit können sehr flexibel auch eventuelle Anforderungen im fertigungstechnischen Herstellungsprozess der Verbindung zwischen Halterung 60 und Spindel 5 erfüllt werden, die sich beispielsweise daraus ergeben können, dass nicht alle der den metallischen Block mit der Durchgangsbohrung 61 definierenden Flächen in einem Fertigungsprozess zur Ausübung der Krafteinwirkung beliebig zugänglich sind.

Als wesentliche Größen für die letztendlich erzielbare Festigkeit der Verbindung zwischen der Halterung 60 und der Spindel 5 ergeben sich damit unter anderem:
□ Länge und Durchmesser der Durchgangsbohrung 61, die die maximal für die Verpressung zur Verfügung stehende Fläche definiert, wobei der Durchmesser der Durchgangsbohrung 61 mit dem Durchmesser der Spindel 5 korrespondiert und die Länge der Durchgangsbohrung von der Dimensionierung der Halterung 60 abhängt
□ Anzahl, Größe und Richtung der für die Krafteinwirkung F1 zur Verpressung gewählten Flächen
□ Größe der mechanischen Krafteinwirkung F1 und Größe des die Krafteinwirkung F1 ausübenden Stempels
□ Richtung der Krafteinwirkung in Bezug auf die Spindelachse, wobei der maximale erwünschte Materialfluss des Haltermaterials in das Spindelgewinde erreicht wird, wenn die Kraft vertikal zur Achse der Spindel auf parallel zur Spindelachse und damit zur Durchgangsbohrung 61 liegende Flächen der Halterung 60 ausgeübt wird
□ Absolute und relative Härte der Materialien für Spindel 5 und Halterung 60

Wie weiter oben erwähnt wurden als Materialien für die Halterung 60 beziehungsweise die Spindel 5 in der vorliegenden beispielhaften Ausführungsform Automatenstahl beziehungsweise 100CR6-Stahl verwendet, grundsätzlich eignen sich aber als Materialien für die Halterung 60 und die Spindel 5 alle Materialien, die sich plastisch verformen lassen, mit denen der gewünschte Unterschied in der Härte für Spindel 5 und Halterung 60 erzielt werden kann und mit denen insbesondere die geforderten Festigkeitswerte der Verbindung zwischen Spindel 5 und Halterung 60 erzielt werden können.

Wie aus Fig. 5 ersichtlich, kann die Spindel 5 vor dem Verpressen mit der Halterung 60 optional so in der Durchgangsbohrung 61 platziert werden, dass das stirnseitige Ende 65 der Spindel 5 zu einem bestimmter Teil aus der Durchgangsbohrung 61 heraus ragt, wobei die Zugänglichkeit der über die Befestigungsöffnung 63 herzustellenden Verbindung dadurch nicht beeinträchtigt wird. Dieser aus der Durchgangsbohrung 61 heraus ragende stirnseitige Bereich 65 der Spindel 5 kann erfindungsgemäß dazu verwendet werden, um die Spindel 5 in diesem stirnseitigen Bereich 65 umzubördeln oder zu vernieten.

Durch das Umbördeln oder Vernieten findet ein Materialfluss des Spindelmaterials um die Stirnseite der Halterung 60 im Bereich der Durchgangsbohrung 61 statt, wodurch eine zusätzliche, die Gesamtfestigkeit der Verbindung zwischen Halterung 60 und Spindel 5 deutlich erhöhender Festigkeitsanteil der gesamten Verbindung erzielt werden kann. Die für das Umbördeln oder Vernieten notwendige Krafteinwirkung auf das stirnseitige Ende der Spindel 5 ist in Fig. 5 beispielhaft mit F2 bezeichnet. Für das Umbördeln oder Vernieten werden bekannte fertigungstechnische Verfahren nach dem Stand der Technik eingesetzt.

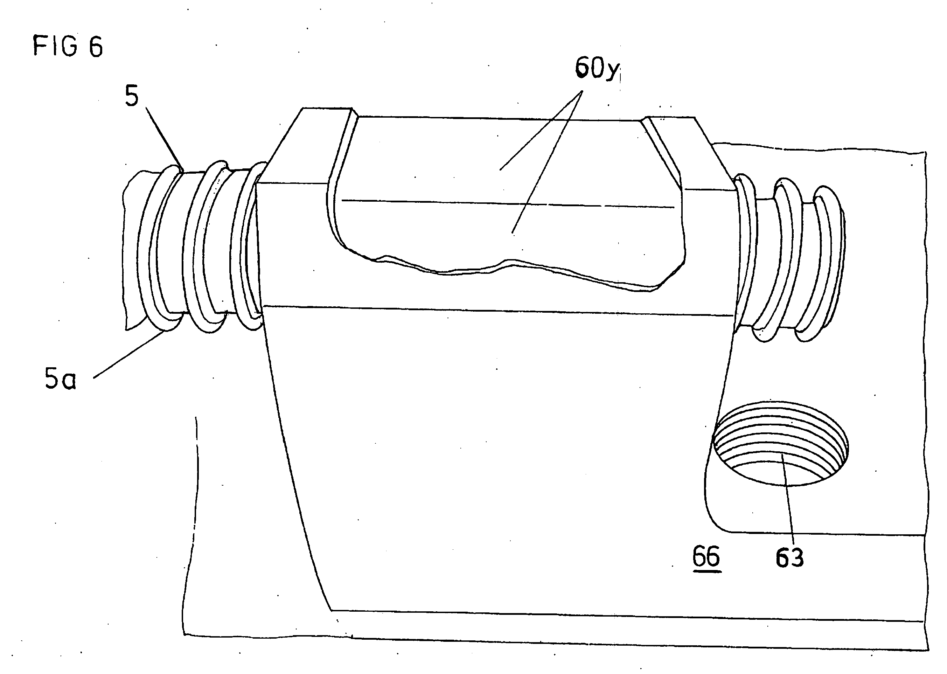

Fig. 6 zeigt die Photographie einer exemplarisch realisierten Ausführungsform der vorliegenden Erfindung in verpresstem Zustand. Zu ersehen ist dabei die in die Durchgangsbohrung eingesetzte Spindel mit dem Spindelgewinde (entsprechend Spindel 5 und Spindelgewinde 5a aus Fig. 5), wobei das Ende der Spindel zu einem gewissen Teil über die Durchgangsbohrung hinaus ragt (rechts im Bild, vergleiche Fig. 5). Wie weiter oben beschrieben, kann dieser Bereich der Spindel optional dazu verwendet werden, um die Spindel in diesem stirnseitigen Bereich umzubördeln oder zu vernieten und damit eine höhere Festigkeit der gesamten Verbindung zu erzielen.

Ebenfalls zu ersehen aus Fig. 6 ist rechts unten die Befestigungsöffnung in dem horizontalen Schenkel der Halterung (entsprechend dem horizontalen Schenkel 66 in den Fig. 3 und 4 und der Befestigungsöffnung 63 in den Fig. 3 bis 5), wobei die Befestigungsöffnung hier mit einem Innengewinde ausgeführt ist. Deutlich zu ersehen ist auch der durch die entsprechenden Flächen definierte vertikale Schenkel der Halterung, der als massiver Block in Vollmaterial ausgeführt ist. Wie Fig. 6 zeigt, sind die den vertikalen Schenkel der Halterung definierenden Flächen nicht auf eine rechtwinklige Anordnung eingeschränkt, so ist die Fläche 60b aus den Fig. 3 bis 5 hier ersetzt durch drei Flächen, wobei eine Fläche weiterhin horizontal ausgerichtet ist, zwei Flächen jedoch schräg verlaufen und sich damit insgesamt eine dachförmige Struktur ergibt. Alle Flächen sind in diesem Beispiel jedoch wiederum parallel zur Achse der Spindel ausgerichtet.

Weiterhin ist aus Fig. 6 deutlich der Flächenbereich der Krafteinwirkung (entsprechend F1 in Fig. 5) zur Verpressung von Halterung und Spindel zu ersehen. Die Krafteinwirkung wurde dabei auf einen großen Bereich der horizontalen Fläche des vertikalen Schenkels der Halterung angewendet sowie auf jeweils einen Teilbereich der oben beschriebenen, schräg angeordneten Flächen. Deutlich zu erkennen ist die Verformung des Materials der Halterung, die sich in einer gegenüber dem Ursprungsmaterial tiefer liegenden Fläche im Bereich der angewendeten Krafteinwirkung darstellt. Ebenfalls zu erkennen ist der durch die mechanische Krafteinwirkung erfolgte Aufwurf von Material an der Oberfläche der Halterung, insbesondere im Bereich der schräg verlaufenden Flächen, der zusammen mit anderen, durch die Verpressung entstandenen scharfkantigen Bereichen oder Graten im weiteren Fertigungsprozess entfernt wird, um beispielsweise Verletzungen bei der späteren Handhabung oder Nichteinhaltung von Toleranzen durch überstehende Materialanteile zu vermeiden.

Fig. 7 zeigt Beispiele für den durch die erfindungsgemäße Verpressung erfolgten Materialfluss im oberen Bereich der Durchgangsbohrung, also dem der Krafteinwirkung zugewandten Bereich (rechte Seite der Photographie) sowie ein Beispiel für die Deformation der Spindel beziehungsweise des Spindelgewindes durch die Krafteinwirkung des Verpressvorganges (linke Seite der Photographie). Obwohl erwartungsgemäß eine gewisse Deformation der Spindel beziehungsweise des Spindelgewindes im Bereich der Verpressung und damit der Durchgangsbohrung zu erkennen ist, wird deutlich, dass die grundsätzliche Struktur des Gewindes der Spindel erhalten bleibt und damit ein Materialfluss in das Gewinde (siehe rechte Seite Fig. 7) durch die daraus resultierende Verzahnung der Materialien von Halterung und Spindel wunschgemäß zu einer formschlüssigen, dauerhaften und hoch festen Verbindung zwischen Spindel und Halterung führt.

### Bezugszeichenliste

- A: Spindelachse
- 1: Halteplatte
- 2: Motor
- 3: Oberschiene
- 4: Unterschiene
- 4a: Befestigungsloch
- 5: Spindel
- 5a: Spindelgewinde
- 6a: Halterung
- 6b: Halterung
- 6c: Schraubverbindung
- 6e: Befestigungsloch
- 8: Haltebügel
- 8a: Befestigungsloch
- 9: Getriebe
- 11: Befestigungslasche
- 21: Antriebswelle
- 22: Antriebswelle
- 60: Halterung
- 60a: Fläche
- 60b: Fläche
- 60c: Fläche
- 60d: Fläche
- 60e: Fläche
- 60f: Fläche
- 60z: in Gewinde 5a der Spindel 5 geflossenes Material
- 60y: Vertiefung
- 61: Durchgangsbohrung
- 62: Befestigungsöffnung
- 63: Befestigungsöffnung
- 65: Stirnseite Spindel
- 66: Schenkel
- F1: Krafteinwirkung
- F2: Krafteinwirkung

## Patentansprüche

1. Halterung für eine Spindel (5) eines Sitzverstellantriebes für ein Kraftfahrzeug, wobei die Halterung (60) als ein metallischer Block ausgebildet ist,
**dadurch gekennzeichnet, dass** die Halterung (60) eine Durchgangsbohrung (61) aufweist, in welcher ein Ende der Spindel (5) sitzt und dort von in das Spindelgewinde (5a) als Spindel (5) gepresstes Material (60z) der Halterung (60) gehalten ist.

2. Halterung nach Anspruch 1,
**dadurch gekennzeichnet, dass** das Material des metallischen Blockes der Halterung (60) weicher als das Material der Spindel (5) ist.

3. Halterung nach Anspruch 1 oder 2,
**dadurch gekennzeichnet, dass** die Spindel (5) aus Stahl und die Halterung (60) aus Stahl besteht.

4. Halterung nach einem der Ansprüche 3,
**dadurch gekennzeichnet, dass** die Spindel aus 100CR6-Stahl und die Halterung aus Automatenstahl besteht.

5. Halterung nach einem der Ansprüche 2 bis 4,
**dadurch gekennzeichnet, dass** das Material der Halterung etwa 20% bis etwa 30% weicher als das Material der Spindel ist.

6. Halterung nach einem der Ansprüche 1 bis 5,
**dadurch gekennzeichnet, dass** der metallische Block der Halterung (60) quaderförmig ausgebildet ist mit einer Bodenfläche (60a), zwei gegenüberliegenden Flächen (60c, 60d), zwei gegenüberliegenden Stirnflächen (60e, 60f) und einer Oberfläche (60b).

7. Halterung nach Anspruch 6,
**dadurch gekennzeichnet, dass** sich die Durchgangsbohrung (61) zwischen den beiden Stirnflächen (60e, 60f) erstreckt.

8. Halterung nach Anspruch 6 oder 7,
**dadurch gekennzeichnet, dass** in einen Bereich des Spindelgewindes (5a) Material der Halterung (60) eingepresst ist.

9. Halterung nach Anspruch 8,
**dadurch gekennzeichnet, dass** in diesem Bereich (A) das Spindelgewinde (5a) zumindest weitgehend undeformiert ist.

10. Halterung nach einem der Ansprüche 1 bis 9,
**dadurch gekennzeichnet, dass** das stirnseitige Ende (65) der Spindel (5) aus der Druchgangsbohrung (61) herausragt und dort umgebördelt bzw. umgenietet ist.

11. Halterung nach einem der Ansprüche 1 bis 10,
**dadurch gekennzeichnet, dass** der metallische Block der Halterung (60) einen L-förmigen Fortsatz aufweist.

12. Halterung nach Ansprüche 6 und 11,
**dadurch gekennzeichnet, dass** der L-förmige Fortsatz die Bodenfläche (60a) einseitig verlängert.

13. Halterung nach einem der Ansprüche 1 bis 12,
**dadurch gekennzeichnet, dass** diese mindestens eine Befestigungsöffnung (62, 63) auf ihrer Bodenfläche aufweist.

14. Halterung nach einem der Ansprüche 1 bis 13,
**dadurch gekennzeichnet, dass** das Ende der Spindel (5) stirnseitig aus der Halterung (60) herausragt und dort umgebördelt bzw. vernietet ist.

15. Halterung nach einem der Ansprüche 1 bis 14,
**dadurch gekennzeichnet, dass** zwei Verformungsbereiche nebeneinander auf der Halterung 60) vorgesehen sind.

## Claims

1. A holder for a spindle (5) of a seat adjustment device for a motor vehicle, wherein the holder (60) is designed as a metal block,
**characterised in that** the holder (60) comprises a through-hole (61) in which one end of the spindle (5) is seated and is held there by material (60z) of the holder, said material being pressed into the spindle thread (5a) as the spindle (5).

2. A holder according to Claim 1,
**characterised in that** the material of the metal block of the holder (60) is softer than the material of the spindle (5).

3. A holder according to Claim 1 or 2,
**characterised in that** the spindle (5) is made of steel and the holder (60) is made of steel.

4. A holder according to one of Claims 3,
**characterised in that** the spindle is made of 100Cr6 steel and the holder is made of free-cutting steel.

5. A holder according to one of Claims 2 to 4,
**characterised in that** the material of the holder is roughly 20% to roughly 30% softer than the material of the spindle.

6. A holder according to one of Claims 1 to 5,
**characterised in that** the metal block of the holder (60) has a cuboidal design with a bottom surface (60a), two opposite surfaces (60c, 60d), two opposite end surfaces (60e, 60f) and an upper surface (60b).

7. A holder according to Claim 6,
**characterised in that** the through-hole (61) extends between the two end surfaces (60e, 60f).

8. A holder according to Claim 6 or 7,
**characterised in that** material of the holder (60) is pressed into one area of the spindle thread (5a).

9. A holder according to Claim 8,
**characterised in that** in this area (A) the spindle thread (5a) is at least largely non-deformed.

10. A holder according to one of Claims 1 to 9,
**characterised in that** the front end (65) of the spindle (5) protrudes from the through-hole (61) and is flanged or riveted there.

11. A holder according to one of Claims 1 to 10,
**characterised in that** the metal block of the holder (60) comprises an L-shaped extension.

12. A holder according to Claims 6 and 11,
**characterised in that** the L-shaped extension lengthens the bottom surface (60a) on one side.

13. A holder according to one of Claims 1 to 12,
**characterised in that** said holder comprises at least one attachment opening (62, 64) on its bottom surface.

14. A holder according to one of Claims 1 to 13,
**characterised in that** the end of the spindle (5) protrudes from the holder (60) at the front end and is flanged or riveted there.

15. A holder according to one of Claims 1 to 14,
**characterised in that** two deformation areas are provided next to one another on the holder (60).

## Revendications

1. Support pour une broche (5) d'un actionneur de siège de véhicule automobile, le support (60) étant réalisé sous la forme d'un bloc métallique,
**caractérisé en ce que**
le support (60) comporte un perçage débouchant (61) recevant une extrémité de la broche (5) qui est tenue par la matière (60z) du support (60) pressée dans le filetage (5a) de la broche (5).

2. Support selon la revendication 1,
**caractérisé en ce que**
la matière du bloc métallique du support (60) est moins dure que celle de la broche (5).

3. Support selon la revendication 1 ou 2,
**caractérisé en ce que**
la broche (5) et le support (60) sont en acier.

4. Support selon la revendication 3,
**caractérisé en ce que**
la broche est en acier 100-CR6 et le support en acier de décolletage.

5. Support selon les revendications 2 à 4,
**caractérisé en ce que**
la matière du support a une dureté inférieure d'environ 20 % à 30 % à celle de la broche.

6. Support selon les revendications 1 à 5,
**caractérisé en ce que**
le bloc métallique du support (60) est parallélépipédique avec une surface de fond (60a), des surfaces (60c, 60d) opposées, des surfaces frontales opposées (60e, 60f) ainsi qu'une surface supérieure (60b).

7. Support selon la revendication 6,
**caractérisé en ce que**
le perçage débouchant (61) s'étend entre les deux surfaces frontales (60e, 60f).

8. Support selon la revendication 6 ou 7,
**caractérisé en ce que**
la matière du support (6) est pressée dans une zone du filetage (5a).

9. Support selon la revendication 8,
**caractérisé en ce que**
le filetage (5a) de la broche est pratiquement non déformé dans cette zone (A).

10. Support selon les revendications 1 à 9,
**caractérisé en ce que**
l'extrémité frontale (65) de la broche (5) dépasse du perçage débouchant (61) et elle y est sertie ou rivetée.

11. Support selon les revendications 1 à 10,
**caractérisé en ce que**
le bloc métallique du support (60) a un prolongement en forme de L.

12. Support selon les revendications 6 et 11,
**caractérisé en ce que**
le prolongement en forme de L prolonge d'un côté la surface de fond (60a).

13. Support selon les revendications 1 à 12,
**caractérisé par**
au moins un orifice de fixation (62, 63) dans sa surface de fond.

14. Support selon les revendications 1 à 13,
**caractérisé en ce que**
l'extrémité de la broche (5) dépasse du côté frontal du support (60) et elle y est sertie ou rivetée.

15. Support selon les revendications 1 à 14,
**caractérisé par**
deux zones de déformation côte-à-côte sur le support (60).
